# EUROPÄISCHE PATENTSCHRIFT

(11) **EP 3 036 141 B1**
(45) Veröffentlichungstag und Bekanntmachung des Hinweises auf die Patenterteilung: **31.01.2018**
(21) Anmeldenummer: 14747302.9
(22) Anmeldetag: 02.08.2014
(51) Int. Cl.: B60W 20/00, B60W 10/06, B60W 10/08, B60K 6/34, B60K 6/44, B60K 6/52, B60L 11/12

(54) **FAHRZEUGANTRIEBSSTEUERUNG**
VEHICLE DRIVE CONTROL
COMMANDE D'ENTRAÎNEMENT DE VÉHICULE AUTOMOBILE

(30) Priorität: 20.08.2013 DE 102013013860
(43) Veröffentlichungstag der Anmeldung: 29.06.2016
(73) Patentinhaber: Audi AG, 85045 Ingolstadt (DE)
(72) Erfinder: BUROW, Clemens, 80339 München (DE); THEN, Florian, 85051 Ingolstadt (DE)
(86) Internationale Anmeldenummer: PCT/EP2014/002136
(87) Internationale Veröffentlichungsnummer: WO 2015/024632

(56) Entgegenhaltungen:
- EP-A2- 1 157 873
- EP-A2- 1 393 951
- WO-A1-2013/076566
- DE-A1-102008 049 225
- US-A1- 2007 227 792
- US-A1- 2009 115 358

## Beschreibung

Die vorliegende Erfindung betrifft ein Verfahren zum Steuern eines Antriebs eines Fahrzeugs mit wenigstens einer ersten mit wenigstens einem Rad besetzten Achse, wobei ein Antriebsmoment von einem Fahrer des Fahrzeugs vorgegeben und die erste Achse mittels einer ersten elektrischen Maschine in Abhängigkeit des Antriebsmoments angetrieben wird und wobei eine mit wenigstens einer Verbrennungskraftmaschine gekoppelte zweite elektrische Maschine elektrische Energie zum Zwecke des Antreibens der ersten Achse durch die erste elektrische Maschine bereitstellt. Die Erfindung betrifft darüber hinaus ein Fahrzeug mit einem Antrieb sowie ein Rechnerprogrammprodukt.

Fahrzeuge der gattungsgemäßen Art sind dem Grunde nach bekannt, so dass es eines gesonderten druckschriftlichen Nachweises hierfür nicht bedarf. Fahrzeuge, auch Kraftfahrzeuge genannt, dienen der Fortbewegung an Land. Ist neben einer elektrischen Maschine als Antrieb ergänzend eine Verbrennungskraftmaschine als Antrieb vorgesehen, so werden solche Fahrzeuge in der Regel Hybridfahrzeuge genannt. So offenbart die US 2007/0227792 A1 ein Hybridsystem eines Fahrzeugs.

Bei einem Fahrzeug mit einer ersten Achse, die ausschließlich mittels einer ersten elektrischen Maschine antreibbar ist, und einer hybridischen Achse, das heißt, eine zweiten Achse, die sowohl mittels einer Verbrennungskraftmaschine als auch mittels einer zweiten elektrischen Maschine betrieben werden kann, kann die erste elektrische Maschine zum Antrieb der ersten Achse aus einer Batterie des Fahrzeugs versorgt werden. Es ist aber auch möglich, die zum Betrieb der ersten elektrischen Maschine der ersten, rein elektrisch antreibbaren Achse benötigte elektrische Energie mittels der Verbrennungskraftmaschine über die zweite elektrische Maschine im Generatorbetrieb zur Verfügung zu stellen. Dieser Betriebszustand wird im Sinne dieser Offenbarung auch als Kompensation bezeichnet. Eine vollständige Kompensation ist dann gegeben, wenn die für den Betrieb der ersten elektrischen Maschine gesamte benötigte elektrische Energie von der zweiten elektrischen Maschine bereitgestellt wird. Zwischen den vorgenannten Zuständen können beliebige Zwischenzustände eingenommen werden, beispielsweise indem die für den Betrieb der ersten elektrischen Maschine erforderliche elektrische Energie hälftig von der Batterie des Fahrzeugs und hälftig von der zweiten elektrischen Maschine bereitgestellt wird. Die erste und die zweite elektrische Maschine sind in der Regel rotierende elektrische Maschinen, beispielsweise Gleichstrommaschinen, Drehstrommaschinen oder dergleichen.

Die elektrischen Maschinen werden in der Regel an jeweils einem Umrichter betrieben, der es erlaubt, elektrische Energie zwischen der jeweiligen elektrischen Maschine und einem Zwischenkreis, an dem der jeweilige Umrichter angeschlossen ist, zu wandeln. Üblicher Weise ist der Zwischenkreis durch einen Gleichstromzwischenkreis gebildet, an dem auch zugleich die Batterie des Fahrzeugs angeschlossen ist. Üblicher Weise ist die Batterie des Fahrzeugs als Akkumulator ausgebildet.

Ist die Batterie des Fahrzeugs in einem Betriebszustand, in dem sie keine signifikante Menge an elektrischer Energie mehr aufnehmen oder abgeben kann, ist ein besonderer Betriebszustand des Antriebs des Fahrzeugs erforderlich, bei dem nämlich mittels der zweiten elektrischen Maschine genau die Menge an elektrischer Energie bereitgestellt wird, die für den Betrieb der ersten elektrischen Maschine erforderlich ist. Um die Batterie möglichst wenig zu belasten, ist es erforderlich, dass erzeugte und verbrauchte elektrische Energie möglichst genau gleich groß sind. Ansonsten bestünde die Gefahr der Überlastung der Batterie des Fahrzeugs. Ein solcher Betrieb des Antriebs wird auch serieller Betrieb genannt. Eine Möglichkeit, diesen Betriebszustand zu realisieren, ist dadurch gegeben, dass die zweite elektrische Maschine stromgeregelt betrieben wird. Mittels der Umrichter wird dann der Strom derart geregelt, dass der generierte Strom genau gleich dem verbrauchten Strom ist.

Es offenbart die EP 1 393 951 A2 ein Steuergerät für eine Fahrzeugantriebskraft.

Beim seriellen Betrieb hat es sich als nachteilig herausgestellt, dass schwer vorhersehbar ist, welches Drehmoment sich aufgrund einer Regelung bei der im Generatorbetrieb betriebenen zweiten elektrischen Maschine einstellt. Darüber hinaus können Schwankungen entstehen, wenn weitere elektrische Komponenten, insbesondere elektrische Verbraucher am Zwischenkreis des Fahrzeugs betrieben werden.

Um an der hybridischen Achse ein gewünschtes Drehmoment einstellen zu können, muss die Verbrennungskraftmaschine exakt das gewünschte Drehmoment zusätzlich zu einem für den Betrieb der zweiten elektrischen Maschine erforderliches Drehmoment bereitstellen. Die Verbrennungskraftmaschine muss also immer auf das sich ändernde Drehmoment eingestellt werden. Dies ist häufig nicht mit der gleichen Dynamik möglich, mit der Änderungen erfolgen. Eine Konsequenz daraus ist, dass sich entsprechende Schwankungen als Momentenänderungen beziehungsweise Beschleunigungsänderungen für den Fahrer bemerkbar machen.

Darüber hinaus sind Betriebszustände zwischen dem reinen seriellen Betrieb und einem Normalbetrieb nur schlecht realisierbar. Im Normalbetrieb wird nämlich die zweite elektrische Maschine als Generator und/oder als Motor über ein Sollmoment gesteuert. Im seriellen Betrieb muss die zweite elektrische Maschine dagegen stromgeregelt betrieben werden. Hieraus ergeben sich erhebliche Probleme beim Wechsel zwischen den Betriebszuständen.

Es ist demnach die Aufgabe der Erfindung, ein Verfahren zum Steuern eines Antriebs eines Fahrzeugs der eingangs genannten Art anzugeben, mittels welchem für den Fahrer bemerkbare Momentenänderungen reduziert werden können.

Als Lösung schlägt die Erfindung ein Verfahren gemäß des unabhängigen Anspruchs 1 sowie ein Fahrzeug gemäß des Weiteren unabhängigen Anspruchs 9 vor. Darüber hinaus wird mit der Erfindung ein Rechnerprogrammprodukt gemäß dem weiteren unabhängigen Anspruch 10 vorgeschlagen. Weitere vorteilhafte Ausgestaltungen ergeben sich aus den Merkmalen der abhängigen Ansprüche.

Insbesondere wird mit der Erfindung verfahrensseitig vorgeschlagen, dass unter Berücksichtigung des Antriebsmoments sowie von Maschinenparametern wenigstens der zweiten elektrischen Maschine jeweils ein der zweiten elektrischen Maschine und der Verbrennungskraftmaschine zugeordnetes Stell- oder Soll-Drehmoment berechnet wird und die zweite elektrische Maschine und die Verbrennungskraftmaschine jeweils in Bezug auf das ihnen zugeordnete Stelldrehmoment gesteuert oder in Bezug auf das ihnen zugeordnete Soll-Drehmoment geregelt werden. Ist für die jeweiligen Maschinen ein Steuern vorgesehen, wird ein Stelldrehmoment berechnet, wohingegen ein Soll-Drehmoment berechnet wird, wenn die Maschinen geregelt werden. Auch Kombinationen können vorgesehen sein, so beispielsweise wenn die elektrische Maschine gesteuert und die Verbrennungskraftmaschine geregelt wird, oder umgekehrt. Entsprechend werden ein Stelldrehmoment für die elektrische Maschine und ein Soll-Drehmoment für die Verbrennungskraftmaschine berechnet, oder entsprechend umgekehrt. Es kann somit für jede Maschine individuell eine Steuerung oder eine Regelung vorgesehen sein. Insbesondere kann vorgesehen sein, dass in Abhängigkeit einer Antriebssituation zwischen Steuern und Regeln der einzelnen Maschinen umgeschaltet wird. Zum Beispiel kann vorgesehen sein, dass bei niedrigen Drehzahlen der elektrischen Maschine eine Steuerung, dagegen bei hohen Drehzahl eine Regelung vorgesehen ist und dergleichen. Entsprechendes kann auch für die Verbrennungskraftmaschine vorgesehen sein. Das Stelldrehmoment dient zum Steuern der jeweiligen Maschine, wohingegen das Soll-Drehmoment als Führungsgröße für einen Regler zum Regeln der jeweiligen Maschine dient.

Mit der Erfindung ist es somit erstmals möglich, seriell gekoppelte Einzelregelungen für die beiden elektrischen Maschinen und die Verbrennungskraftmaschine zu vermeiden und durch eine gemeinsame Regelungsbasis zu ersetzen. Dadurch kann erreicht werden, dass insbesondere die am Ende der dem Stand der Technik üblichen Regelungskette im Ergebnis ausgegebene Drehmomentenvorgabe erheblich schneller und präziser erfolgen kann. Dadurch kann eine Reaktion des Antriebs auf Änderungen erheblich beschleunigt werden, so dass unerwünschte Auswirkungen der Drehmomentenänderungen wie Momentenschwankungen oder dergleichen in Bezug auf das Antriebsmoment deutlich reduziert werden können. Vorzugsweise kann eine derartige Regelung realisiert werden, dass Momentenänderungen für den Fahrer nicht mehr bemerkbar sind. Darüber hinaus kann erreicht werden, dass ein etwaig vorhandener Energiespeicher des Fahrzeugs, der als Puffer für den Fall von Regelungsabweichungen im Einregelungsmodus Energie bereitstellen beziehungsweise aufnehmen muss, hinsichtlich seiner Kapazität zumindest reduziert werden kann wenn nicht sogar komplett entfallen kann.

Dementsprechend ist das gattungsgemäße Fahrzeug durch eine Steuerung gekennzeichnet, die eigenrichtet ist, das Verfahren der Erfindung auszuführen. Die Steuerung kann beispielsweise durch eine Rechnereinheit, eine elektronische Hardewareschaltung, Kombinationen hiervon und/oder dergleichen gebildet sein.

Mit der Erfindung wird ferner ein Rechnerprogrammprodukt umfassend ein Programm für eine Rechnereinheit vorgeschlagen, mit Programmcodeabschnitten eines Programms zum Ausführen der Schritte eines Verfahrens gemäß der Erfindung, wenn das Programm durch die Rechnereinheit ausgeführt wird. Das Rechnerprogrammprodukt umfasst weitere rechnerausführbare Komponenten, die, wenn das Programm auf der Rechnereinheit ausgeführt wird, dazu dienen, das erfindungsgemäße Verfahren auszuführen. Das vorgenannte Rechnerprogrammprodukt kann als rechnerlesbares Speichermedium ausgebildet sein.

Der Antrieb des Fahrzeugs umfasst zumindest eine erste mit wenigstens einem Rad besetzte Achse sowie vorzugsweise auch eine zweite mit wenigstens einem Rad besetzte Achse. Besonders vorteilhaft ist jede Achse an ihren Enden mit jeweils einem Rad ausgerüstet.

Ein Fahrer des Fahrzeugs kann ein Antriebsmoment vorgeben, mittels welchem Antriebsmoment das Fahrzeug mittels des Antriebs angetrieben wird. Die Antriebsmomentvorgabe kann vom Nutzer mittels eines Pedals, beispielsweise eines Gaspedals, oder dergleichen erfolgen. Darüber hinaus kann das Antriebsmoment natürlich auch von einer Geschwindigkeitsregelung oder dergleichen vorgegeben sein.

Das erfindungsgemäße Konzept erlaubt es, die Regelgeschwindigkeit erheblich zu verkürzen. Dadurch kann ferner erreicht werden, dass aufgrund von Regelungseigenschaften verursachte Schwingungen im Bereich des Antriebs weitgehend vermieden werden können. Die Stabilität der Regelung kann verbessert werden.

Die erste und die zweite elektrische Maschine können als Gleichstrommaschine, als Drehstrommaschine oder dergleichen ausgebildet sein. Insbesondere können die beiden elektrischen Maschinen gleich ausgebildet sein. Für jede elektrische Maschine ist vorzugsweise ein Umrichter vorgesehen, der einerseits an die jeweilige elektrische Maschine und andererseits an einen Zwischenkreis angeschlossen ist, an dem auch - sofern vorhanden - die Batterie des Fahrzeugs angeschlossen ist. Die Umrichter sind jeweils an die Art der Maschine und deren Eigenschaften angepasst ausgebildet. Der Zwischenkreis ist vorzugsweise als Gleichstromzwischenkreis ausgebildet. Bei einer Gleichstrommaschine ist folglich der Umrichter durch einen DC/DC-Wandler gebildet. Vorzugsweise sind die Umrichter für einen bidirektionalen Betrieb ausgelegt, das heißt, sie können einerseits Energie aus dem Zwischenkreis entnehmen und der jeweiligen angeschlossenen elektrischen Maschine zuführen oder auch elektrische Energie, die von der jeweiligen elektrischen Maschine bereitgestellt wird, in den Zwischenkreis überführen. Ist dagegen die erste elektrische Maschine lediglich im Motorbetrieb betrieben und die zweite elektrische Maschine lediglich im Generatorbetrieb, so können die jeweiligen Umrichter entsprechend vereinfacht ausgebildet sein, indem ein Energiefluss lediglich in einer einzigen Richtung bereitgestellt wird.

Die Verbrennungskraftmaschine kann eine übliche Verbrennungskraftmaschine für ein Kraftfahrzeug, insbesondere ein Personenkraftfahrzeug sein, beispielsweise betrieben mit einem Brennstoff wie Benzin, Gas, Diesel oder dergleichen. Die Kopplung der Verbrennungskraftmaschine mit der zweiten elektrischen Maschine kann über eine Welle erfolgen, die mechanische Energie aufgrund der Verbrennung des Brennstoffs der zweiten elektrischen Maschine zuführt, die diese in elektrische Energie umwandelt und bereitstellt. Die bereitgestellte elektrische Energie der zweiten elektrischen Maschine wird zum Zwecke des Antreibens der ersten Achse durch die erste elektrische Maschine dieser bereitgestellt.

Ein Aspekt der Erfindung sieht vor, dass jeweils ein der zweiten elektrischen Maschine und der Verbrennungskraftmaschine zugeordnetes Soll-Drehmoment berechnet wird, wobei die Berechnung unter Berücksichtigung des Antriebsmoments sowie von Maschinenparametern wenigstens der zweiten elektrischen Maschine erfolgt. Vorzugsweise können hier ergänzend Maschinenparameter der ersten elektrischen Maschine und/oder der Verbrennungskraftmaschine berücksichtigt werden. Die Erfindung umgeht damit die im Stand der Technik übliche Regelungskette und die sich aufgrund der Verkettung ergebenden Regelabweichungen und die sich hieraus ergebenden Probleme, denn - anders als im Stand der Technik - ist es bei der Erfindung nicht erforderlich, das Einschwingen aller gekoppelten Regelkreis abzuwarten. Darüber hinaus kann die Stabilität der Steuerung deutlich verbessert werden.

Insbesondere ist das von der zweiten elektrischen Maschine im Generatorbetrieb bewirkte Drehmoment zu jeder Zeit bekannt. Eine Änderung kann - soweit es die Batterie zulässt - an die Dynamik der Verbrennungskraftmaschine angepasst werden. Darüber hinaus erlaubt es die Erfindung, einen quasi fließenden Übergang zwischen dem Normalbetrieb und dem seriellen Betrieb zu erreichen. Die im Stand der Technik hier bestehende Problematik kann gänzlich ausgeräumt werden. Darüber hinaus lässt sich mittels der Erfindung der Ladungszustand der gegebenenfalls angeschlossenen Batterie steuern. So ist es möglich, einen vorgegebenen Ladezustand herzustellen und/oder zu halten. Insbesondere erlaubt es die Erfindung, eine Umschaltung zwischen einer Stromregelung im seriellen Betrieb und einer Momentensteuerung im Normalbetrieb zu vermeiden.

Ferner wird eine zweite mit wenigstens einem Rad besetzte Achse mittels der mit der zweiten elektrischen Maschine gekoppelten Verbrennungskraftmaschine angetrieben. In dieser Ausgestaltung ist die Verbrennungskraftmaschine somit nicht nur zum Antrieb der zweiten elektrischen Maschine im Generatorbetrieb vorgesehen, sondern sie dient zugleich auch dazu, einen Teil des Antriebsmoments über die zweite Achse für den Antrieb des Fahrzeugs bereitzustellen. Entsprechend wird das Antriebsmoment für den Antrieb des Fahrzeugs auf die erste elektrische Maschine und die Verbrennungskraftmaschine aufgeteilt. Dabei ist bezüglich des Soll-Drehmoments der Verbrennungskraftmaschine zu berücksichtigen, dass ergänzend zum Anteil des Antriebsmoments von der Verbrennungskraftmaschine zugleich auch das entsprechende Drehmoment für die zweite elektrische Maschine ergänzend bereitzustellen ist. Die Regelung ist in diesem Fall entsprechend angepasst.

Gemäß einer Weiterbildung der Erfindung ist vorgesehen, dass das Berechnen ein Ermitteln eines Betriebsstromes der ersten elektrischen Maschine umfasst, so dass das Antriebsmoment zumindest teilweise mittels der ersten elektrischen Maschine bereitgestellt wird. Hierdurch ist es möglich, das Antriebsmoment beziehungsweise den Teil des Antriebsmoments, der durch das Antreiben mittels der ersten elektrischen Maschine bereitgestellt wird, genau festzulegen. Darüber hinaus kann das Ermitteln des Betriebsstroms dazu dienen, weitere Beeinflussungen im Bereich der elektrischen Kopplung, insbesondere des Zwischenkreises bei der Berechnung der Soll-Drehmomente für die zweite elektrische Maschine und die Verbrennungskraftmaschine zu berücksichtigen.

Insbesondere kann das Berechnen der Soll-Drehmomente eine Energieanforderung wenigstens einer weiteren, an den elektrischen Maschinen angeschlossenen Komponente des Fahrzeugs berücksichtigen. Eine solche elektrische Komponente kann beispielsweise eine Klimaanlage, Scheinwerfer, eine Audiowiedergabeanlage oder dergleichen sein. In der Regel wird die Energieanforderung folglich die eines elektrischen Verbrauchers sein. Darüber hinaus kann aber auch vorgehen sein, dass eine elektrische Komponente Energie bereitstellt wird, beispielsweise eine Solarzelle angebracht an einem Fahrzeugdach, eine Brennstoffzelle oder dergleichen. Unter Berücksichtigung dieser Energieanforderungen kann dann ein Berechnen der Soll-Drehmomente für die zweite elektrische Maschine und die Verbrennungskraftmaschine erfolgen. Ist die Verbrennungskraftmaschine ausschließlich mit der zweiten elektrischen Maschine im Generatorbetrieb gekoppelt, sind die beiden Soll-Drehmomente betragsmäßig gleich.

Gemäß einer weiteren Ausgestaltung der Erfindung wird vorgeschlagen, dass zum Ausgleichen einer Regelabweichung während eines Einregelvorgangs ein elektrischer Energiespeicher verwendet wird, der an die erste und die zweite elektrische Maschine angeschlossen ist. Regelabweichungen können unter anderem während eines Ausregelvorgangs auftreten, bei dem die Regelung einen Ist-Wert auf einen Soll-Wert einregelt oder eine Störgröße ausregelt. Insbesondere ist der elektrische Energiespeicher zu diesem Zweck an den Zwischenkreis angeschlossen, an den auch die entsprechenden Umrichter für die erste und die zweite elektrische Maschine angeschlossen sind. Insbesondere beim Einregeln beziehungsweise Ausregeln können Abweichungen beispielsweise im elektrischen Kreis auftreten, die dazu führen, dass erzeugte und verbrauchte elektrische Energie nicht im Gleichgewicht stehen. Zu diesem Zweck kann der Energiespeicher benutzt werden, indem er einen Überschuss an elektrischer Energie zwischenspeichern oder einen Mangel an elektrischer Energie durch Bereitstellen von elektrischer Energie ausgleichen kann. Dadurch kann nicht nur die Regelungseigenschaft gemäß der Erfindung verbessert sondern auch die Stabilität der Regelung weiter erhöht werden. Der Energiespeicher kann beispielsweise durch einen Akkumulator oder auch durch einen Kondensator beziehungsweise Kombinationen hiervon gebildet sein. Natürlich kann der Energiespeicher auch durch die Fahrzeugbatterie gebildet sein. Die Erfindung erlaubt es, die Kapazität des elektrischen Energiespeichers sehr klein zu wählen gegenüber dem Stand der Technik. Hier kommt der Auslegung des elektrischen Energiespeichers zugute, dass mit der Erfindung eine hohe Regelungsgeschwindigkeit erreicht werden kann. Die zwischenzuspeichernden Energiemengen können dadurch sehr klein ausfallen.

Darüber hinaus kann gemäß einem weiteren Aspekt der Erfindung das Berechnen derart erfolgen, dass eine Kapazität eines elektrischen Energiespeichers minimal ist. Dies erlaubt es, den elektrischen Energiespeicher sehr klein und kompakt auszubilden, wodurch die Montage erleichtert und Kosten reduziert werden können. Vorzugsweise ist zu diesem Zweck vorgesehen, dass das Berechnen auf Basis einer optimalen Regelung erfolgt. Hierdurch kann erreicht werden, dass abzufangende Energiedifferenzen minimiert werden. Entsprechend kann die Kapazität des elektrischen Energiespeichers klein ausfallen.

Eine Weiterbildung sieht vor, dass das Berechnen ein Ermitteln eines der ersten elektrischen Maschine zugeordneten Soll-Drehmoments umfasst und die erste elektrische Maschine in Bezug auf das ihr zugeordnete Soll-Drehmoment geregelt wird. Diese Ausgestaltung geht aus von der Aufteilung des Antriebsmoments auf die Verbrennungskraftmaschine und die erste elektrische Maschine. Entsprechend des Aufteilungsverhältnisses wird ein Soll-Drehmoment für die erste elektrische Maschine berechnet, das zur Regelung der ersten elektrischen Maschine dient. Dadurch kann eine zuverlässige und genaue Aufteilung des Antriebsmoments auf die erste elektrische Maschine und die Verbrennungskraftmaschine gewährleistet werden.

Eine weitere Ausgestaltung sieht vor, dass die zweite elektrische Maschine ausschließlich im Generatorbetrieb betrieben wird. Hierdurch können nicht nur etwaige Umrichter bezüglich ihres Aufwands reduziert werden, sondern es kann auch eine vereinfachte elektrische Maschine als zweite elektrische Maschine verwendet werden, die speziell für den Generatorbetrieb ausgelegt ist. Hierdurch lassen sich Kosten einsparen. Darüber hinaus kann die Regelung gemäß der Erfindung insgesamt reduziert werden, weil ein motorischer Betrieb der zweiten elektrischen Maschine nicht bereitzustellen ist. Hierdurch kann die Zuverlässigkeit der Regelung insgesamt weiter verbessert werden.

Gemäß einer Weiterbildung ist vorgesehen, dass die Maschinenparameter Wirkungsgrade der ersten elektrischen Maschine, der zweiten elektrischen Maschine und/oder der Verbrennungskraftmaschine umfassen. Die Berücksichtigung wenigstens einer der vorgenannten Wirkungsgrade erlaubt es, die Genauigkeit der Regelung weiter zu verbessern. Insbesondere kann ein Einregelvorgang und/oder auch eine Regelabweichung deutlich reduziert werden. Natürlich können auch weitere Parameter zur Berücksichtigung vorgesehen sein, so beispielsweise Trägheitsmomente der Maschinen, Reaktionsgeschwindigkeiten der Verbrennungskraftmaschine bei Erhöhung beziehungsweise Reduzierung einer Brennstoffzufuhr und/oder dergleichen.

Weitere Vorteile und Merkmale sind der folgenden Beschreibung eines Ausführungsbeispiels anhand der Figuren zu entnehmen. In den Figuren bezeichnen gleiche Bezugszeichen gleiche Merkmale und Funktionen.

Es zeigen:
- Fig.1: eine Steuerung für einen Antrieb eines Kraftfahrzeugs mit einer elektrisch angetriebenen Achse in einer schematischen Flussdiagrammansicht gemäß dem Stand der Technik und
- Fig. 2: eine schematische Flussdiagrammansicht für eine Steuerung eines Antriebs eines Fahrzeugs gemäß der Erfindung.

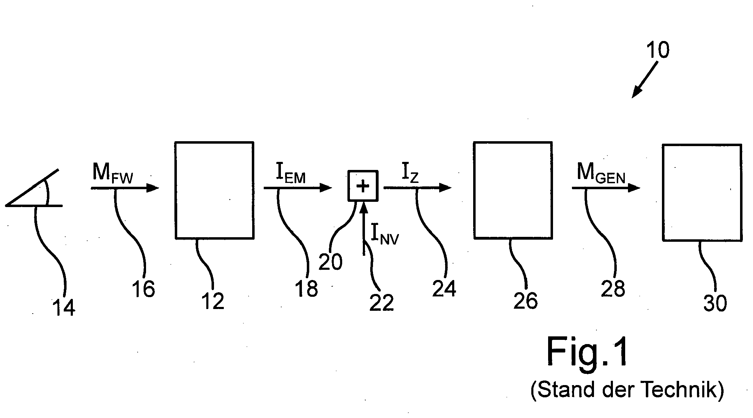

Fig. 1 zeigt in schematischer Darstellung eine Flussdiagrammansicht einer Steuerung eines Antriebs eines Fahrzeugs gemäß des Stands der Technik, wobei der Antrieb mit seiner Steuerung mit dem Bezugszeichen 10 bezeichnet ist. Bei dem Fahrzeug handelt es sich um ein übliches Kraftfahrzeug, das in den Figuren nicht dargestellt ist. Das Fahrzeug weist eine erste und eine zweite Achse auf, die jeweils an ihren Enden mit jeweils einem Rad bestückt sind. In Fig. 1 ist ein Pedal 14 dargestellt, welches vorliegend als Fußpedal ausgebildet ist und dazu dient, von einem Fahrer betätigt zu werden, um ein gewünschtes Antriebsmoment vorzugeben. Das Pedal 14 ist demnach ein elektromechanischer Wandler, der ein der Betätigung durch den Nutzer entsprechendes Signal erzeugt und in dem Antrieb zur Verfügung stellt. Das Signal repräsentiert ein Antriebsmoment, das von dem Fahrer des Fahrzeugs vorgegeben ist. Dieses Antriebsmoment M_{FW} ist mit dem Bezugszeichen 16 gekennzeichnet und dient der Steuerung einer ersten elektrischen Maschine 12, die die erste Achse des Fahrzeugs in Abhängigkeit des Antriebsmoments geregelt antreibt.

Zur Erzeugung des gewünschten Antriebsmoments mittels der ersten elektrischen Maschine 12 wird ein Strom I_{EM} 18 bereitgestellt, der vorliegend ein Gleichstrom eines Zwischenkreises ist. Der Zwischenkreis stellt somit die elektrische Energie für das Antreiben durch die elektrische Maschine 12 bereit. An dem Zwischenkreis ist ferner bei dem Bezugszeichen 20 ein Nebenverbraucher angeschlossen, der vorliegend durch eine Klimaanlage gebildet ist. Die Klimaanlage selbst ist in der Fig. 1 nicht dargestellt. Sie benötigt jedoch für ihren bestimmungsgemäßen Betrieb den Strom I_{NV} 22. Die beiden Ströme I_{EM} 18 und I_{NV} 22 bilden in der Summe den Zwischenkreisstrom I_{Z} 24, der von einem Generator 26 bereitzustellen ist. Entsprechend benötigt der Generator ein antreibendes Drehmoment M_{GEN} 28, das in Form von rotatorischer Energie von einer Verbrennungskraftmaschine 30 bereitgestellt wird. Die Verbrennungskraftmaschine 30 wird entsprechend der Drehmomentanforderung des Generators 26 mit Brennstoff versorgt.

Zu erkennen ist aus der Fig. 1, dass mehrere Regelkreise, nämlich ein Regelkreis für die erste elektrische Maschine 12 sowie jeweils ein weiterer Regelkreis für die zweite als Generator betriebene elektrische Maschine 26 sowie für die Verbrennungskraftmaschine 30 in verketteter Weise miteinander gekoppelt sind.

Erfolgt eine Änderung des Antriebsmoments aufgrund einer Änderung der Betätigung des Pedals 14 durch den Nutzer oder aufgrund einer Änderung einer Stromanforderung der Klimaanlage, so müssen sich die Regelungen bezüglich der ersten und zweiten elektrischen Maschine 12, 26 auf die neuen Verhältnisse einregeln. Zugleich entstehen zwischen der ersten und der zweiten elektrischen Maschine 12, 26 Regelungsschwingungen aufgrund der Unabhängigkeit der jeweiligen Regelung. Entsprechendes gilt für die Kopplung der zweiten elektrischen Maschine 26 mit der Verbrennungskraftmaschine 30. Um entsprechende Schwingungen zu reduzieren, sind in der Regel große Zeitkonstanten vorgesehen, so dass eine entsprechende Verzögerung der Antriebsdrehmomentbereitstellung infolge einer Betätigung des Pedals 14 erfolgt. Entsprechendes gilt für Änderungen der Anforderungen elektrischer Energie durch Nebenverbraucher wie der Klimaanlage. Momentenschwankungen im Fahrbetrieb des Fahrzeugs sind deshalb die Folge.

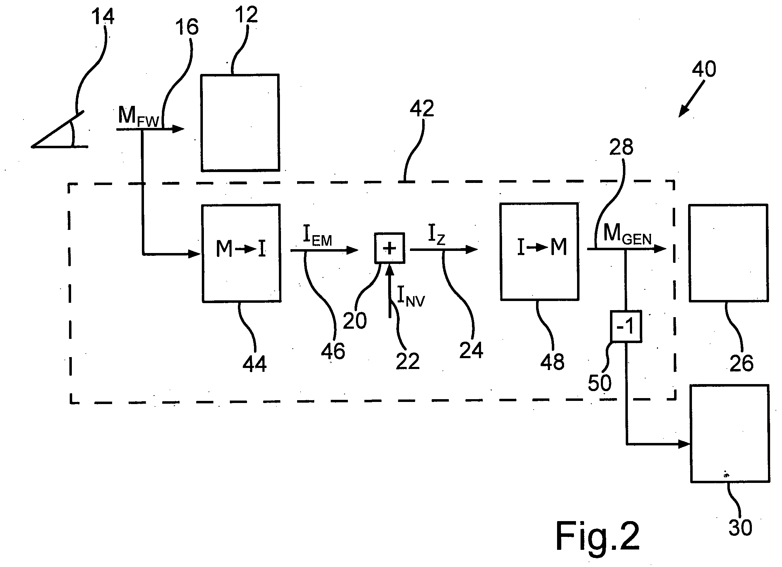

Fig. 2 zeigt in schematischer Darstellung ein Flussdiagramm für einen Antrieb mit einer Steuerung gemäß der Erfindung. Der mechanische Aufbau entspricht dem Aufbau, wie er zur Fig. 1 beschrieben ist, weshalb ergänzend auf die Ausführungen der Beschreibung zur Fig. 1 verwiesen wird. Gleiche Bezugszeichen bezeichnen wieder gleiche Funktionen und Elemente.

Im Unterschied zu Fig 1 ist gemäß Fig. 2 eine Steuerung 42 vorgesehen, die vorliegend in Form einer nicht weiter dargestellten Rechnereinheit realisiert ist. Die in der Fig. 2 dargestellten Strukturelemente kennzeichnen deshalb die Funktion der Steuerung 42 beziehungsweise der entsprechenden Rechnereinheit.

Zu erkennen ist wieder, dass der ersten elektrischen Maschine 12 ein gemäß einer durch eine Pedalbetätigung eines Pedals 14 durch einen Nutzer vorgegebenes Antriebsmoment M_{FW} 16 bereitgestellt wird, welches der Regelung der ersten elektrischen Maschine 12 dient. Zugleich wird das Antriebsmoment M_{FW} 16 der Steuerung 42 bereitgestellt, die ausgehend von dem bereitgestellten Antriebsmoment M_{FW} 16 mittels einer ersten Recheneinheit 44 einen Strom I_{EM} 46 der ersten elektrischen Maschine 12 errechnet, der für den bestimmungsgemäßen Betrieb zur Erzeugung des Antriebsmoments M_{FW} 16 erforderlich ist.

Zu diesem Zweck verwendet die erste Rechnungseinheit 44 den Wirkungsgrad der ersten elektrischen Maschine 12 sowie gegebenenfalls den Wirkungsgrad des zugeordneten Umrichters.

Sodann wird der elektrische Stromverbrauch von Nebenverbrauchern wie der Klimaanlage erfasst und - wie bereit zur Fig. 1 erläutert - der Zwischenkreisstrom I_{Z} 24 berechnet. Dieser setzt sich aus der Summe des Stromes I_{NV} 22 und I_{FW} 46 zusammen.

Der Strom I_{Z} 24 wird sodann in einer zweiten Berechnungseinheit 48 verarbeitet, wobei die Berechnungseinheit 48 ein Soll-Drehmoment für die zweite als Generator betriebene elektrische Maschine 26 berechnet. Das Soll-Drehmoment wird der zweiten elektrischen Maschine beziehungsweise gegebenenfalls dem entsprechenden Umrichter zugeführt, so dass die zweite elektrische Maschine auf das vorgegebene Soll-Drehmoment geregelt werden kann. Zugleich wird das Soll-Drehmoment bei 50 negiert und der Wert einer nicht dargestellten Regelungseinheit für die Verbrennungskraftmaschine 30 zugeführt. Der Inverter ist mit 50 bezeichnet. Auf diese Weise werden die zweite elektrische Maschine 26 und die Verbrennungskraftmaschine 30 parallel auf das betragsmäßig gleiche Soll-Drehmoment jedoch mit umgekehrten Vorzeichen geregelt.

Dadurch kann insgesamt eine sehr schnelle Regelung erreicht werden. Zugleich nimmt die Gefahr der Schwingungsanfälligkeit der Regelung insgesamt ab, so dass auch Regelzeitkonstanten reduziert werden können. Insgesamt ergibt sich eine besonders schnelle Regelungsmöglichkeit, so dass für den Fahrer bemerkbare Momentenänderungen weitgehend vermieden werden können.

Das vorstehend beschriebene Ausführungsbeispiel dient lediglich der Erläuterung der Erfindung und ist für diese nicht beschränkend.

## Patentansprüche

1. Verfahren zum Steuern eines Antriebs (40) eines Fahrzeugs mit wenigstens einer ersten mit wenigstens einem Rad besetzten Achse, wobei ein Antriebsmoment (16) von einem Fahrer des Fahrzeugs vorgegeben und das Fahrzeug mittels des Antriebs (40) in Abhängigkeit des Antriebsmoments (16) angetrieben wird, wobei eine mit wenigstens einer Verbrennungskraftmaschine (30) gekoppelte zweite elektrische Maschine (26) elektrische Energie zum Zwecke des Antreibens der ersten Achse durch eine erste elektrische Maschine (12) bereitstellt und wobei eine zweite mit wenigstens einem Rad besetzte Achse mittels der mit der zweiten elektrischen Maschine (26) gekoppelten Verbrennungskraftmaschine (30) angetrieben wird, um die zweite Achse sowohl mittels der Verbrennungskraftmaschine (30) als auch mittels der zweiten elektrischen Maschine (26) zu betreiben, wobei unter Berücksichtigung des Antriebsmoments (16) sowie von Maschinenparametern wenigstens der zweiten elektrischen Maschine (26) jeweils ein der zweiten elektrischen Maschine (26) und der Verbrennungskraftmaschine (30) zugeordnetes Soll-Drehmoment (28) berechnet wird und die zweite elektrische Maschine (26) und die Verbrennungskraftmaschine (30) jeweils in Bezug auf das ihnen zugeordnete Soll-Drehmoment (28) geregelt werden, **dadurch gekennzeichnet, dass** die zweite elektrische Maschine (26) und die Verbrennungskraftmaschine (30) parallel auf das betragsmäßig gleiche Soll-Drehmoment jedoch mit umgekehrtem Vorzeichen geregelt werden.

2. Verfahren nach Anspruch 1, **dadurch gekennzeichnet, dass** das Berechnen ein Ermitteln eines Betriebsstromes der ersten elektrischen Maschine (12) umfasst, sodass das Antriebsmoment (16) zumindest teilweise mittels der ersten elektrischen Maschine (12) bereitgestellt wird.

3. Verfahren nach Anspruch 1 oder 2, **dadurch gekennzeichnet, dass** das Berechnen der Soll-Drehmomente (28) eine Energieanforderung (22) wenigstens einer weiteren, an den elektrischen Maschinen (12, 26) angeschlossenen elektrischen Komponente des Fahrzeugs berücksichtigt.

4. Verfahren nach einem der Ansprüche 1 bis 3, **dadurch gekennzeichnet, dass** zum Ausgleichen einer Regelabweichung während eines Einregelvorgangs ein elektrischer Energiespeicher verwendet wird, der an die erste und die zweite elektrische Maschine (12, 26) angeschlossen ist.

5. Verfahren nach Anspruch 4, **dadurch gekennzeichnet, dass** das Berechnen derart erfolgt, dass eine Kapazität des elektrischen Energiespeichers minimiert wird.

6. Verfahren nach einem der Ansprüche 1 bis 5, **dadurch gekennzeichnet, dass** das Berechnen ein Ermitteln eines der ersten elektrischen Maschine (12) zugeordneten Soll-Drehmoments umfasst und die erste elektrische Maschine (12) in Bezug auf das ihr zugeordnete Soll-Drehmoment geregelt wird.

7. Verfahren nach einem der Ansprüche 1 bis 6, **dadurch gekennzeichnet, dass** die zweite elektrische Maschine (26) ausschließlich im Generatorbetrieb betrieben wird.

8. Verfahren nach einem der Ansprüche 1 bis 7, **dadurch gekennzeichnet, dass** die Maschinenparameter Wirkungsgrade der ersten elektrische Maschine (12), der zweiten elektrische Maschine (26) und/oder der Verbrennungskraftmaschine (30) umfassen.

9. Fahrzeug mit einem Antrieb (40), der wenigstens eine erste mit wenigstens einem Rad besetzte Achse, eine erste elektrische Maschine (12), die mit der ersten Achse gekoppelt ist, eine Verbrennungskraftmaschine (30) und eine wenigstens mit der Verbrennungskraftmaschine (30) gekoppelte zweite elektrische Maschine (26) zum Bereitstellen von elektrischer Energie zum Zwecke des Antreibens der ersten Achse durch die erste elektrische Maschine (12) aufweist, wobei das Fahrzeug eine zweite mit wenigstens einem Rad besetzte Achse aufweist, die mittels der mit der zweiten elektrischen Maschine (26) gekoppelten Verbrennungskraftmaschine (30) antreibbar ist, um die zweite Achse sowohl mittels der Verbrennungskraftmaschine (30) als auch mittels der zweiten elektrischen Maschine (26) zu betreiben,
**gekennzeichnet durch**
eine Steuerung (42), die eingerichtet ist, das Verfahren nach einem der vorhergehenden Ansprüche auszuführen.

10. Rechnerprogrammprodukt umfassend ein Programm für eine Rechnereinheit (42), mit Programmkodeabschnitten eines Programms zum Ausführen der Schritte eines Verfahrens nach einem der Ansprüche 1 bis 8, wenn das Programm durch die Rechnereinheit ausgeführt wird.

11. Rechnerprogrammprodukt nach Anspruch 10, **dadurch gekennzeichnet, dass** das Rechnerprogrammprodukt ein rechner-lesbares Medium umfasst, auf welchem die Programmkodeabschnitte gespeichert sind.

12. Rechnerprogrammprodukt nach Anspruch 10 oder 11, **dadurch gekennzeichnet, dass** das Programm direkt in einen internen Speicher der Rechnereinheit (42) ladbar ist.

## Claims

1. A method for controlling a drive (40) of a vehicle comprising at least a first axle having at least one wheel, wherein a drive torque (16) is preset by a vehicle driver and the vehicle is driven by the drive (40) depending on the drive torque (16), wherein a second electric machine (26) coupled with at least one combustion engine (30) supplies electrical energy for the purpose of driving the first axle by a first electric machine (12), and wherein a second axle fitted with at least one wheel is driven by means of the combustion engine (30) coupled with the second electric machine (26) to operate the second axle both by means of the combustion engine (30) and by means of the second electric machine (26),
wherein,
taking into consideration the drive torque (16) as well as the machine parameters of at least the second electric machine (26), a target torque (28) of the second electric machine (26) and of the combustion engine (30) respectively is calculated, and the second electric machine (26) and the combustion engine (30) are each regulated in relation to the target torque (28) assigned to same, **characterised in that**
the second electric machine (26) and the combustion engine (30) are regulated in parallel to the same target torque value, but with opposite sign.

2. A method according to claim 1, **characterised in that** the calculation also comprises a determination of an operating current of the first electric machine (12), in such a way that the drive torque (16) is at least partially provided by means of the first electric machine (12).

3. A method according to claim 1 or 2, **characterised in that** the calculation of the target torques (28) takes into account an energy requirement (22) of at least one further electrical component of the vehicle connected to the electric machines (12, 26).

4. A method according to one of claims 1 to 3, **characterised in that** an electric energy storage device connected to the first and the second electrical machine (12, 26) is used to compensate for a deviation in regulation during an adjustment procedure.

5. A method according to claim 4, **characterised in that** the calculation is carried out in such a way that the electric energy storage device capacity is minimised.

6. A method according to one of claims 1 to 5, **characterised in that** the calculation includes determining a target torque assigned to the first electric machine (12) and the first electric machine (12) is regulated to the target torque assigned to it.

7. A method according to one of claims 1 to 6, **characterised in that** the second electrical machine (26) is exclusively operated in the generator mode.

8. A method according to one of claims 1 to 7, **characterised in that** the machine parameters include efficiency factors of the first electric machine (12), the second electric machine (26) and/or the combustion engine (30).

9. A vehicle with a drive (40) comprising at least a first axle fitted with at least one wheel, a first electric machine (12) coupled with the first axle, a combustion engine (30) and at least a second electric machine (26) coupled with the combustion engine (30), which is used for providing electrical energy for driving of the first axle by the first electric machine (12), wherein the vehicle has a second axle which is fitted with at least one wheel and which can be driven by the combustion engine (30) coupled with the second electric machine (26) in order to drive the second axle both by means of the combustion engine (30) and by means of the second electric machine (26),
**characterised by**
a controller (42) that is suitable for carrying out the method according to any of the preceding claims.

10. A computer program product comprising a program for a computer unit (42) comprising program code sections of a program for carrying out the steps of a method according to one of claims 1 to 8, if the program is executed by the computer unit.

11. A computer program product according to claim 10, **characterised in that** the computer program product comprises a computer-readable medium, on which the program code sections are stored.

12. A computer program product according to claim 10 or 11, **characterised in that** the program can be downloaded directly into an internal memory of the computer unit (42).

## Revendications

1. Procédé de commande d'une propulsion (40) d'un véhicule ayant au moins un premier essieu équipé d'au moins une roue,
dans lequel un couple moteur (16) est prescrit par un conducteur du véhicule et le véhicule est entraîné au moyen de la propulsion (40) en fonction du couple moteur (16),
dans lequel une deuxième machine électrique (26) couplée à au moins un moteur à combustion interne (30) fournit de l'énergie électrique via une première machine électrique (12) dans le but d'entraîner le premier essieu,
dans lequel un deuxième essieu équipé d'au moins une roue est entraîné au moyen du moteur à combustion interne (30) couplé à la deuxième machine électrique (26) pour faire fonctionner le deuxième essieu aussi bien au moyen du moteur à combustion interne (30) qu'au moyen de la deuxième machine électrique (26)
et dans lequel, en tenant compte du couple moteur (16) ainsi que des paramètres de machine au moins de la deuxième machine électrique (26), un couple théorique (28) associé à la deuxième machine électrique (26) et au moteur à combustion interne (30) est calculé à chaque fois et la deuxième machine électrique (26) ainsi que le moteur à combustion interne (30) sont régulés à chaque fois par rapport au couple théorique (28) qui leur est associé,
**caractérisé en ce que** la deuxième machine électrique (26) et le moteur à combustion interne (30) sont régulés en parallèle sur le couple théorique identique en valeur absolue mais de signe contraire.

2. Procédé selon la revendication 1, **caractérisé en ce que** le calcul comprend une détermination d'un courant de fonctionnement de la première machine électrique (12) de telle sorte que le couple moteur (16) est fourni au moins en partie au moyen de la première machine électrique (12).

3. Procédé selon la revendication 1 ou 2, **caractérisé en ce que** le calcul des couples théoriques (28) prend en compte une demande d'énergie (22) d'au moins un autre composant électrique, raccordé aux machines électriques (12, 26), du véhicule.

4. Procédé selon l'une quelconque des revendications 1 à 3, **caractérisé en ce que**, pour compenser un écart de régulation pendant une opération de réglage, on utilise un dispositif de stockage d'énergie électrique qui est raccordé à la première et à la deuxième machine électrique (12, 26).

5. Procédé selon la revendication 4, **caractérisé en ce que** le calcul s'effectue de telle sorte qu'une capacité du dispositif de stockage d'énergie électrique est minimisée.

6. Procédé selon l'une quelconque des revendications 1 à 5, **caractérisé en ce que** le calcul comprend une détermination d'un couple théorique associé à la première machine électrique (12) et la première machine électrique (12) est régulée par rapport au couple théorique qui lui est associé.

7. Procédé selon l'une quelconque des revendications 1 à 6, **caractérisé en ce que** la deuxième machine électrique (26) fonctionne exclusivement en mode générateur.

8. Procédé selon l'une quelconque des revendications 1 à 7, **caractérisé en ce que** les paramètres de machine comprennent des rendements de la première machine électrique (12), de la deuxième machine électrique (26) et/ou du moteur à combustion interne (30).

9. Véhicule avec une propulsion (40), laquelle comporte au moins un premier essieu équipé d'au moins une roue, une première machine électrique (12) qui est couplée au premier essieu, un moteur à combustion interne (30) et une deuxième machine électrique (26) couplée au moins au moteur à combustion interne (30) afin de fournir de l'énergie électrique dans le but d'entraîner le premier essieu via la première machine électrique (12),
dans lequel le véhicule comporte un deuxième essieu qui est équipé d'au moins une roue et qui peut être entraîné au moyen du moteur à combustion interne (30) couplé à la deuxième machine électrique (26) pour faire fonctionner le deuxième essieu aussi bien au moyen du moteur à combustion interne (30) qu'au moyen de la deuxième machine électrique (26),
**caractérisé par** une commande (42) qui est conçue pour mettre en oeuvre le procédé selon l'une quelconque des revendications précédentes.

10. Produit de programme informatique comprenant un programme destiné à un ordinateur (42), avec des parties de code de programme d'un programme destiné à mettre en oeuvre les étapes d'un procédé selon l'une quelconque des revendications 1 à 8 lorsque le programme est exécuté par l'ordinateur.

11. Produit de programme informatique selon la revendication 10, **caractérisé en ce que** le produit de programme informatique comprend un support qui peut être lu par un ordinateur et sur lequel les parties de code de programme sont stockées.

12. Produit de programme informatique selon la revendication 10 ou 11, **caractérisé en ce que** le programme peut être chargé directement dans une mémoire interne de l'ordinateur (42).
